# EUROPEAN PATENT APPLICATION

(11) **EP 4 712 397 A1**
(43) Date of publication of application: **18.03.2026**
(21) Application number: 24813727.5
(22) Date of filing: 31.01.2024
(51) Int. Cl.: H04L 5/00, H04W 24/02

(54) **COMMUNICATION METHOD AND APPARATUS, AND COMPUTER-READABLE STORAGE MEDIUM**

(30) Priority: 29.05.2023 CN 202310620470
(71) Applicant: ZTE Corporation, Shenzhen, Guangdong 518057 (CN)
(72) Inventor: ZHANG, Yujie, Shenzhen, Guangdong 518057 (CN); HUANG, Jun, Shenzhen, Guangdong 518057 (CN); CHENG, Wei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/075086
(87) International publication number: WO 2024/244521

(57) **Abstract**

Disclosed are a communication method and apparatus, and a computer-readable storage medium. The communication method comprises: sending a sensing signal on the basis of a first communication resource, the sensing signal being used for acquiring information of a sensing target; and sending a service signal on the basis of a second communication resource, the service signal being used for bearing information of a communication service; the first communication resource is different from the second communication resource.

## Description

The present disclosure claims priority to the Chinese patent application No. 202310620470.7, filed on May 29, 2023, the entire content of which is incorporated in the present disclosure by reference.

### TECHNICAL FIELD

The present disclosure relates to the field of communication technologies, and in particular to a communication method and apparatus, and a computer-readable storage medium.

### BACKGROUND

With the rapid development of the mobile communication technology, services enabled by mobile communication systems are continuously extended to vertical industries. Integrated sensing and communication has become an important evolutionary direction in the extension and enhancement of the fifth generation mobile communication technology (5th generation mobile communication technology-Advanced, 5G-Advanced). The integrated sensing and communication is an integration of a wireless communication function and a wireless sensing function.

### SUMMARY

In an aspect, a communication method is provided, and applied to a base station. The communication method includes: sending a sensing signal based on a first communication resource, the sensing signal being used to acquire information of a sensing target; and sending a service signal based on a second communication resource, the service signal being used to carry information of a communication service; where the first communication resource is different from the second communication resource.

In another aspect, a communication method is provided, and applied to a cloud service platform. The communication method includes: acquiring access information for N sensing targets accessing a base station; determining P sensing targets among the N sensing targets according to the access information, the P sensing targets being used for a data transmission with the cloud service platform; and sending first indication information to the base station, the first indication information being used to indicate the base station to configure a fourth communication resource for the P sensing targets.

In yet another aspect, a base station is provided. The base station includes:
a sending unit, configured to send a sensing signal based on a first communication resource, the sensing signal being used to acquire information of a sensing target; and the transmitting unit, further configured to send a service signal based on a second communication resource, the service signal being used to carry information of a communication service; where the first communication resource is different from the second communication resource.

In yet another aspect, a cloud service platform is provided. The cloud service platform includes:
a receiving unit, configured to acquire access information for N sensing targets accessing a base station;
a processing unit, configured to determine P sensing targets among the N sensing targets according to the access information, the P sensing targets being used for a data transmission with the cloud service platform; and
a sending unit, configured to send first indication information to the base station, the first indication information being used to indicate the base station to configure a fourth communication resource for the P sensing targets.

In yet another aspect, a communication apparatus is provided. The communication apparatus includes: a memory and a processor; the memory and the processor are coupled with each other; the memory is used to store a computer program; and the processor implements the communication method described in any one of the above aspects when executing the computer program.

In yet another aspect, a computer-readable storage medium is provided. The computer-readable storage medium has stored computer program instructions, and the computer program instructions, when executed by a processor, implement the communication method described in any one of the above aspects.

In yet another aspect, a computer program product is provided. The computer program product includes computer program instructions, and the computer program instructions, when executed by a processor, implement the communication method described in any one of the above aspects.

### BRIEF DESCRIPTION OF THE DRAWINGS

In order to more clearly illustrate technical solutions in the present disclosure, a brief description of the drawings to be used in some embodiments of the present disclosure will be given below. Obviously, the drawings in the following description are only drawings of some embodiments of the present disclosure, and other drawings may further be obtained according to these drawings for the ordinary skilled in the art.
FIG. 1 is a schematic diagram of an antenna angle according to some embodiments.
FIG. 2 is a schematic diagram of a signal coverage range of an antenna according to some embodiments.
FIG. 3 is a schematic diagram of a mono-static sensing scenario according to some embodiments.
FIG. 4 is a schematic diagram of a bi-static sensing scenario according to some embodiments.
FIG. 5 is a schematic diagram of an integrated sensing and communication scenario according to some embodiments.
FIG. 6 is a schematic flowchart of a communication method according to some embodiments.
FIG. 7 is a schematic diagram of an NR time-frequency resource according to some embodiments.
FIG. 8 is a schematic diagram of time-frequency resources for a sensing signal and a service signal according to some embodiments.
FIG. 9 is another schematic diagram of time-frequency resources for a sensing signal and a service signal according to some embodiments.
FIG. 10 is yet another schematic diagram of time-frequency resources for a sensing signal and a service signal according to some embodiments.
FIG. 11 is a schematic diagram of another integrated sensing and communication scenario according to some embodiments.
FIG. 12 is a schematic diagram of a relationship between an angle of an antenna adjusted by a phase shifter and a time domain resource according to some embodiments.
FIG. 13 is a schematic diagram of an antenna array according to some embodiments.
FIG. 14 is a schematic diagram of another relationship between an angle of an antenna adjusted by a phase shifter and a time domain resource according to some embodiments.
FIG. 15 is a schematic diagram of yet another relationship between an angle of an antenna adjusted by a phase shifter and a time domain resource according to some embodiments.
FIG. 16 is a schematic flowchart of another communication method according to some embodiments.
FIG. 17 is a schematic diagram of resources for an SSB with a sensing signal and a service signal according to some embodiments.
FIG. 18 is another schematic diagram of resources for an SSB with a sensing signal and a service signal according to some embodiments.
FIG. 19 is yet another schematic diagram of resources for an SSB with a sensing signal and a service signal according to some embodiments.
FIG. 20 is a schematic flowchart of yet another communication method according to some embodiments.
FIG. 21 is a structural schematic diagram of a base station according to some embodiments.
FIG. 22 is a structural schematic diagram of a cloud service platform according to some embodiments.
FIG. 23 is a structural schematic diagram of a communication apparatus according to some embodiments.

### DETAILED DESCRIPTION

In order to enable those skilled in the art to better understand the technical solutions of the embodiments of the present disclosure, the technical solutions in the present disclosure will be described clearly and completely below in conjunction with the drawings in the present disclosure. Obviously, the described embodiments are only some of the embodiments of the present disclosure, but not all of the embodiments. All other embodiments obtained by those ordinary skilled in the art without making creative labor based on the embodiments in the present disclosure, fall within the scope of protection of the present disclosure.

It should be noted that in the present disclosure, the words "exemplarily (exemplary)" or "for example (e.g., such as)" are used to represent an example, an explanation, or an illustration. Any embodiment or design solution described with "exemplarily (exemplary)" or "for example (e.g., such as)" in the present disclosure should not be interpreted as being more preferred or more advantageous than other embodiments or design solutions. Rather, the use of the words "exemplarily (exemplary)" or "for example (e.g., such as)" is intended to present the related concepts in a specific manner.

Hereinafter, the terms "first", "second", etc., are used for descriptive purposes only, and are not to be interpreted as indicating or implying the relative importance or implicitly specifying the number of technical features indicated. Thus, features defined with "first", "second", etc., may include one or more such features, explicitly or implicitly.

In the description of the present disclosure, unless otherwise specified, "/" means "or", e.g., A/B may mean A or B. "and/or" herein is only a description for an association relationship of associated objects, which means that there may be three relationships, for example, A and/or B may mean: only A, only B, and both A and B. In addition, "at least one" means one or more, and "multiple/plurality of" means two or more.

In order to facilitate the understanding of the technical solutions of the embodiments of the present disclosure, the following brief introduction of the related technical terms of the present disclosure is first given.

### 1. Communication resource:

In a fifth-generation (5^{th} generation, 5G) new radio (NR) system, a communication resource includes a time domain resource and a frequency domain resource. The time domain resource includes a slot and a symbol, where the symbol may also be referred to as an OFDM (Orthogonal Frequency Division Multiplexing) symbol. A slot includes 12 or 14 OFDM symbols.

The concepts in the frequency domain include a resource block (RB) and a subcarrier (sub-carrier). The RB is a basic scheduling resource block of frequency domain resources, and 1 RB includes 12 subcarriers. Generally, subcarrier spacing (sub-carrier spacing, SCS) is 15 kHz.

A signal needs to occupy a time domain resource and a frequency domain resource during a transmission, which may also be uniformly referred to as a time-frequency resource.

A communication resource also includes an antenna resource. The antenna resource includes one or more antennas, or one or more ports. The antenna resource is mainly used to transmit or receive an electromagnetic wave carrying the signal.

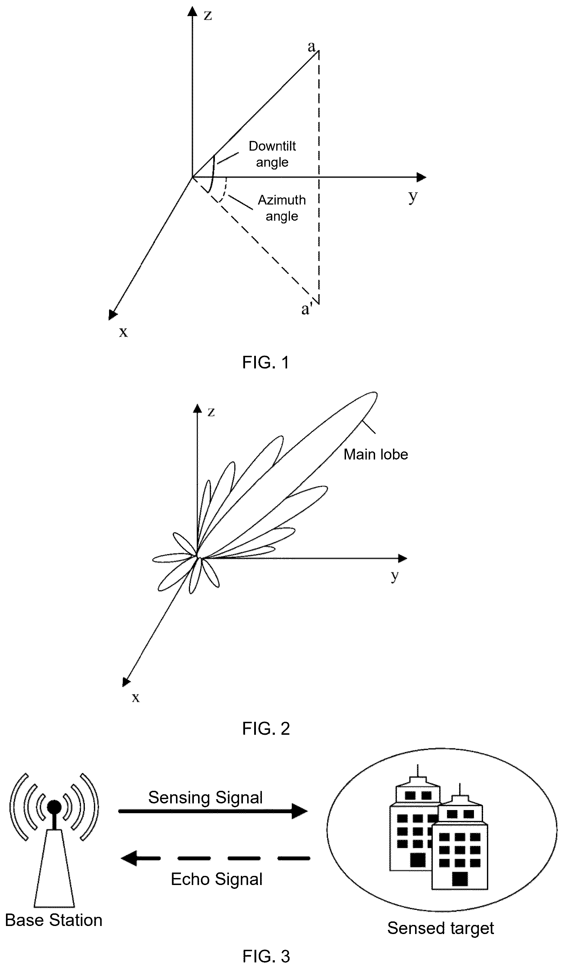

The coverage range of the electromagnetic wave may be implemented by adjusting an angle of the antenna resource. In some embodiments, the angle of the antenna resource includes an azimuth angle and a pitch angle, where the pitch angle may also be referred to as a downtilt angle. The azimuth angle is an angle between the antenna and a reference direction based on a horizontal plane. The downtilt angle is an angle between the antenna and the horizontal plane. Exemplarily, as shown in FIG. 1, in a space formed by an x-axis, a y-axis, and a z-axis, a plane formed by the x-axis and the y-axis is the horizontal plane, and a direction of the y-axis is the reference direction of the horizontal plane. An antenna a' is a projection of the antenna a in the horizontal plane, and then the angle between the antenna a' and the y-axis is the azimuth angle of the antenna a, and the angle between the antenna a and the antenna a' is the downtilt angle of the antenna a.

It should be noted that the antenna a in FIG. 1 is only used as an example, and in practical applications, the antenna may be oriented in any one of directions in the three-dimensional space shown in FIG. 1, which is not limited thereto.

In practical applications, the angle of the antenna resource has a correspondence with the coverage range of the signal. Specifically, the angle of the antenna resource determines a direction of a beam it forms, and the beam is used to carry the signal. FIG. 2 is a schematic diagram of a signal coverage range of the antenna a shown in FIG. 1. In conjunction with the directional diagram of the antenna a shown in FIG. 1, this FIG. 2 is a schematic diagram of the signal coverage area of the antenna a composed by a plurality of lobes. The area in which the antenna radiates the strongest intensity is a main lobe, and the remaining lobes are referred to as side lobes or minor lobes.

It can be understood that the angle of the antenna resource described above refers to the direction of the main lobe. In practical applications, the angle of the antenna resource may be adjusted by a phase shifter, to change the corresponding signal coverage range.

### 2. Sensing service:

The sensing service refers to acquiring related information of a target that has an influence on the sensing signal such as scattering through the transmission of the sensing signal. In practical applications, the sensing service may detect a target position, moving speed and other information, through the sensing signal. The sensing service may be applied in the fields of unmanned driving, monitoring, and so on. The sensing service is a special communication service, and in order to distinguish it from existing communication services, in the following description, a communication service refers to other communication services other than the sensing service. The sensing service includes two sensing modes, which are mono-static sensing and bi-static sensing, respectively. FIG. 3 shows a schematic diagram of a mono-static sensing scenario. The base station acquires a position and other related information of a sensed target, by sending a sensing signal and receiving an echo signal scattered by the sensed target. The base station may also be referred to as a mono-station sensing system.

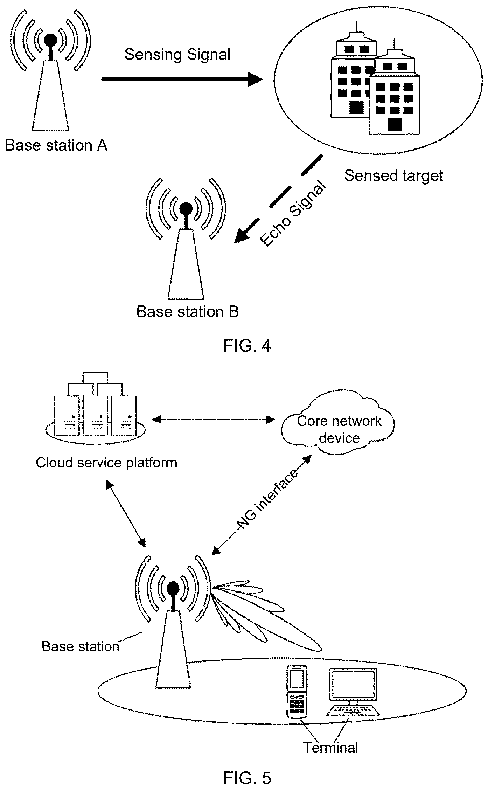

FIG. 4 is a schematic diagram of a bi-static sensing scenario. A base station A sends a sensing signal, and a base station B receives an echo signal obtained from the sensing signal being scattered by the sensed target, so that the base station B acquires the position and other related information of the sensed target. A system composed of the base station A and the base station B may be referred to as a bi-station sensing system.

Future integrated sensing and communication scenarios include but are not limited to, the above-described sensing services completed by the base station(s). The base station also plays an important role in the communication service, and therefore, the base station implementing the communication service and the sensing service may also be referred to as an integrated sensing and communication base station system or an integrated sensing and communication system.

FIG. 5 is a schematic diagram of an integrated sensing and communication scenario provided in the embodiments of the present disclosure. A base station, a terminal, a core network device, and a cloud service platform are illustrated in FIG. 5. The terminal is connected to the base station by wireless means, and the base station is connected to the core network device by wireless or wired means. In the NR system, the base station is connected to the core network device via an NG interface. The core network device and the base station may be independent and different physical devices, or the functions of the core network device and the logical functions of the base station may be integrated in a same physical device, or some of the functions of the core network device and some of the functions of the base station may be integrated in a physical device. A terminal and a terminal, and a base station and a base station may be connected to each other by wired or wireless means.

The base station may also be referred to as a radio access network node (RAN node) or an access network device. The radio access network node is used to implement wireless physical layer functions, resource scheduling and wireless resource management, wireless access control and mobility management functions, quality of service management, data compression and encryption, and other functions. The access network device is used to provide communication coverage for a specific geographic area, and communicate with a terminal device in the covered area (cell). The base station may be various forms of control nodes (e.g., a network controller, a radio controller (e.g., a radio controller in a cloud radio access network (CRAN) scenario)), and the like. The base station includes various forms of macro base stations, micro base stations (also referred to as small stations), relay stations, and access points (APs), and the like.

The base station includes one or more transmission reception points (TRPs), for implementing reception and/or sending of signals, where each TRP may have a different communication capability. For example, the number of antennas or the direction of the antenna panel for implementing the TRP communication function is different, so that different TRPs have different communication capabilities.

In systems that use different radio access technologies, the names of the devices with base station functions may be different. For example, in an LTE system, the device with the base station function may be an evolved base station (evolved NodeB, eNB or eNodeB). In a heterogeneous network (HetNet) scenario, the device with the base station function may be a micro base station eNB. In a distributed base station scenario, the device with the base station function may be a base band unit (BBU) and a remote radio unit (RRU). In a CRAN scenario, the device with the base station function may be a base band pool (BBU pool) and an RRU. In a 5G system or an NR system, the device with the base station function may be a next generation base station node (next generation node base station, gNB). The present disclosure does not limit the name of the base station. The access network device may also be an access network device in a future evolved public land mobile network (PLMN), etc.

The terminal is a device with a wireless transceiver function, and may send signals to a base station or receive signals from a base station. The terminal may also be referred to as a terminal device, a user equipment (UE), a mobile platform, a mobile terminal and so on. The terminal may be widely used in various scenarios, such as device-to-device (D2D), vehicle to everything (V2X) communication, machine-type communication (MTC), internet of things (IOT), virtual reality (VR), augmented reality (AR), industrial control, automated driving, remote healthcare, smart grid, smart furniture, smart office, smart wearable, smart transportation, smart city, etc. The terminal may be a mobile phone, a tablet computer, a computer with a wireless transceiver function, a wearable device, a vehicle, an aircraft, a ship, a robot, a robotic arm, or a smart home device, etc. The terminal may be a mobile phone, an augmented reality device, a virtual reality device, a tablet computer, a notebook computer, an ultra-mobile personal computer (UMPC), a netbook, a personal digital assistant (PDA), and so on.

The core network device is used to provide user connections, management for users, and to complete bearing for services. The cloud service platform is used for data processing and management of the acquired sensing information. Exemplarily, the base station periodically uploads the acquired sensing information, and the cloud service platform stores and updates the sensing information. When the sensing information includes position information of the sensed target, and the sensed target is a movable object, the cloud service platform may generate a moving trajectory according to position information of the sensed target at different time points, and render it to the user to provide intuitive sensing information.

It should be noted that the embodiments of the present disclosure do not limit some technologies and device forms used for the base station, the terminal, the core network device, and the cloud service platform.

With the rapid development of the mobile communication technology, the integration of the wireless communication function and the wireless sensing function is currently an important technical development direction. How to implement the resource sharing of the wireless communication function and the wireless sensing function is a technical problem that needs to be solved urgently.

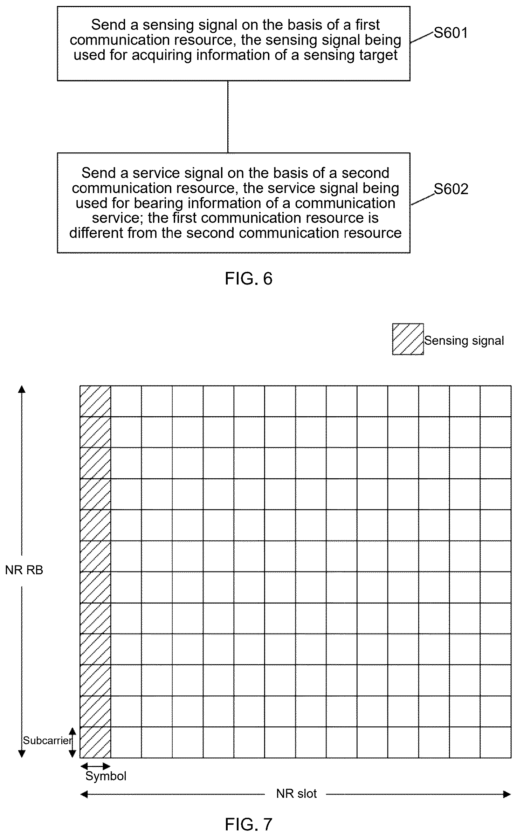

In this regard, the present disclosure provides a communication method, for allocating different communication resources for a sensing service and a communication service, to achieve flexible scheduling of resources. As shown in FIG. 6, the method is applied to a base station and includes the following steps S601 to S602.

S601, send a sensing signal based on a first communication resource, the sensing signal being used to acquire information of a sensing target.

The communication resource generally includes a time-frequency resource, and the communication resource described in the embodiments of the present disclosure also includes an antenna resource. In some embodiments, the first communication resource described above includes a first time domain resource, a first antenna resource, and a first frequency domain resource. The first time domain resource and the first frequency domain resource may be uniformly referred to as a first time-frequency resource.

Sending the sensing signal based on the first communication resource, may mean that the sensing signal completes a transmission process by occupying the first communication resource. For example, in a case where the first time domain resource is 1 symbol, the first frequency domain resource is 1 RB, and the first antenna resource is an m×n antenna array, the sensing signal implements the transmission based on the above-described communication resource.

Exemplarily, a schematic diagram of an NR time-frequency resource is shown in FIG. 7. An NR slot includes 14 symbols and an RB includes 12 subcarriers. The shaded blocks indicate the above-described first time domain resource and first frequency domain resource occupied by the sensing signal.

It should be noted that the above description is only used as an example, and in practical applications, there is no limitation on the number of symbols, the number of subcarriers, as well as positions of the symbols and the subcarriers, occupied by the sensing symbol.

It should be noted that the above-described first communication resource for transmitting the sensing signal may also be referred to as a communication resource of a sensing domain. It can be understood that in practical applications, the sensing service may be different in space from the space in which other communication services are located, and thus, the space in which the sensing service is applied may be referred to as the sensing domain, and allocating the communication resource for the sensing domain separately, helps to improve the processing efficiency of the sensing service.

S602, send a service signal based on a second communication resource, the service signal being used to carry information of a communication service; where the first communication resource is different from the second communication resource.

The information of the communication service carried by the service signal is information of other communication services that are not sensing services.

The second communication resource includes a second time domain resource, a second antenna resource, and a second frequency domain resource. The second time domain resource and the second frequency domain resource may be uniformly referred to as a second time-frequency resource.

It should be noted that the above-described second communication resource for transmitting the service signal may also be referred to as a communication resource of a communication domain.

The above-described first communication resource being different from the second communication resource, includes the following two modes.

Mode 1: the first antenna resource is the same as the second antenna resource, and the first time-frequency resource is different from the second time-frequency resource.

The first antenna resource being the same as the second antenna resource, means that the same antenna or port is used to carry the sensing signal and the service signal.

The first time-frequency resource being different from the second time-frequency resource includes at least one of: the first time domain resource being different from the second time domain resource, and the first frequency domain resource being different from the second frequency domain resource.

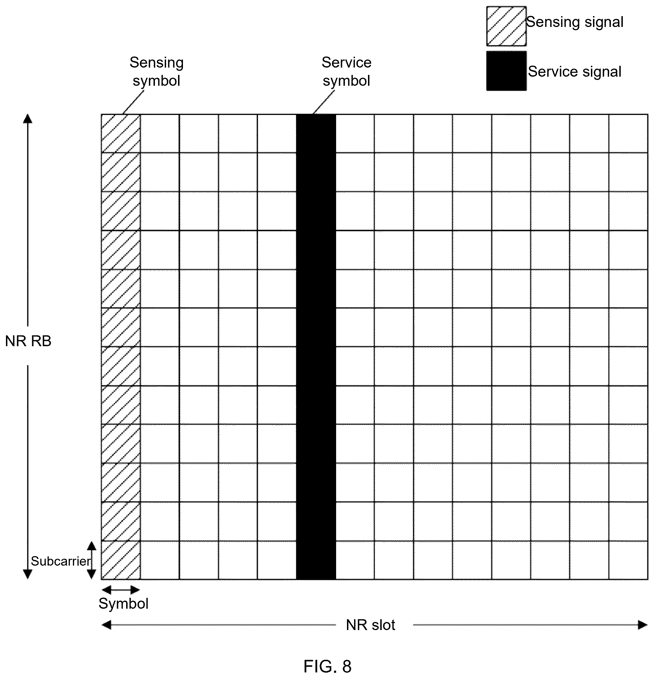

In some embodiments, the first time domain resource is different from the second time domain resource, and the first frequency domain resource is the same as the second frequency domain resource. As shown in FIG. 8, taking both the sensing signal and the service signal occupying an RB as an example, the shaded part indicates a symbol occupied by the sensing signal and the black part indicates a symbol occupied by the service signal. It can be seen that different symbols are used to carry different signals. The symbol carrying the sensing signal may also be referred to as a sensing symbol, and the symbol carrying the service signal may also be referred to as a service symbol.

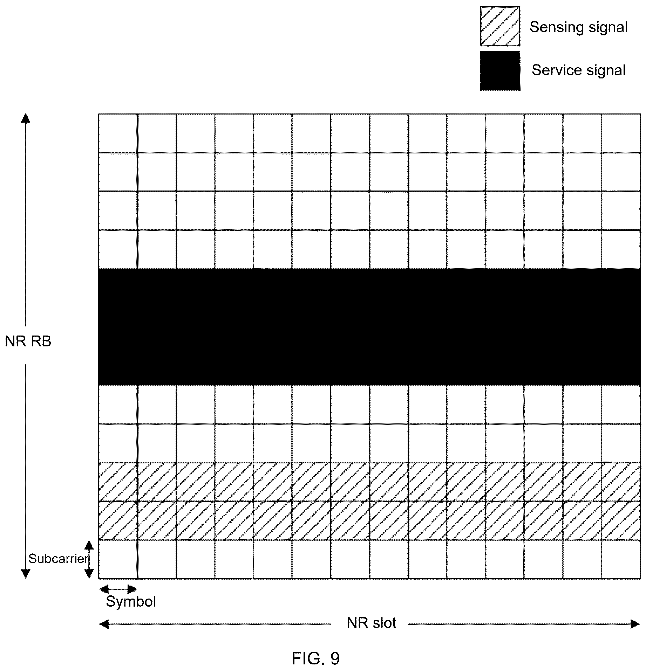

In some embodiments, the first time domain resource is the same as the second time domain resource, and the first frequency domain resource is different from the second frequency domain resource. As shown in FIG. 9, taking the sensing signal occupying 2 subcarriers and the service signal occupying 3 subcarriers as an example, the shaded part indicates the frequency domain resources of the sensing signal in each symbol, and the black part indicates the frequency domain resources of the service signal in each symbol.

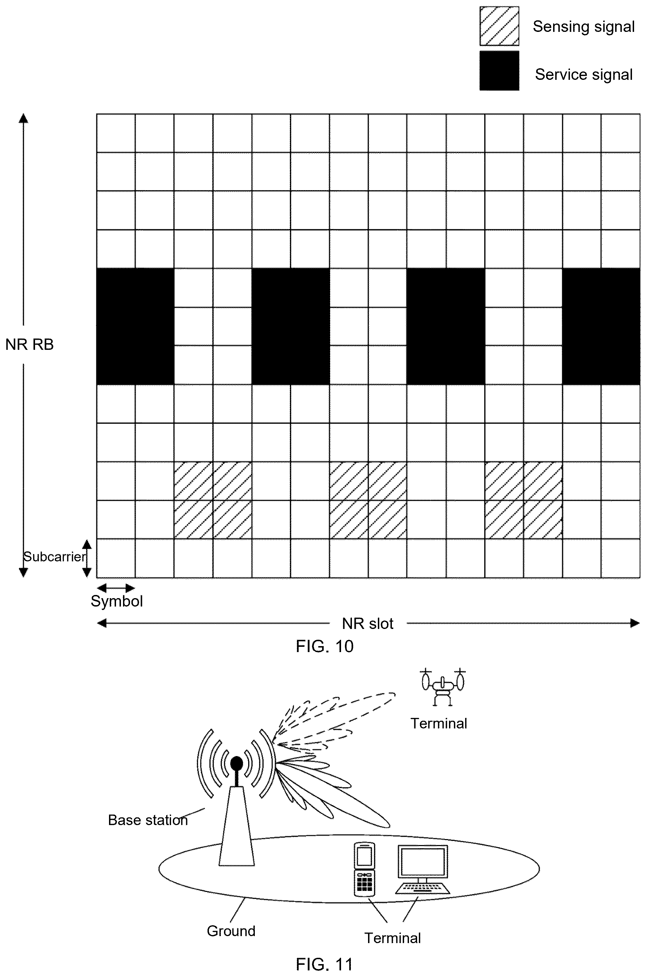

In some embodiments, the first time domain resource is different from the second time domain resource, and the first frequency domain resource is different from the second frequency domain resource. A schematic diagram of time-frequency resources of the sensing signal and the service signal is shown in FIG. 10. In a slot, the sensing signal and the service signal occupy 2 symbols alternately, and the sensing signal occupies 2 subcarriers in the corresponding symbols, and the service signal occupies 3 subcarriers in the corresponding symbols.

It should be noted that the above description is only used as an example, and in practical applications, there is no limitation on the number of and positions of symbols and subcarriers occupied by the service signal and the sensing signal.

Through the above-described Mode 1, it is implemented that beams formed at different time points based on the same antenna resource carry the service signal or the sensing signal, or different frequency domain resources at the same time point carry different signals, or different frequency domain resources at different time points carry different signals, so as to implement the division of communication resources in the integrated sensing and communication scenario, and to provide separate environments for different communication services.

In conjunction with the scenario shown in FIG. 5 above, the base station generally communicates with the terminal on the ground. With the development of science and technology, drone transportation and other modes may be implemented in the future by using the advantages of the open air, to bring convenience to people's lives. The base station will need to communicate and sense with a terminal such as a drone in the air. However, because the main application scenario of current communication is on the ground, the base station generally directs the angle of the antenna resource toward the ground, to improve the communication efficiency of the terminal on the ground. In this way, it is not favorable for the base station to communicate and sense with the terminal in the air. In this regard, in conjunction with the above-described Mode 1, in the case of using the same antenna resource, the antenna resource may be directed toward different angles in different time domain resources by distinguishing time domain resources. As shown in FIG. 11, an example in which the base station performs a communication service with a terminal on the ground and the base station performs a sensing service with a terminal in the air, is taken for an illustration.

Optionally, the above steps S601 to S602, when implemented based on the above Mode 1, include that: the direction of the first beam formed by the first antenna resource in the first communication resource is different from the direction of the second beam formed by the second antenna resource in the second communication resource, the first antenna resource and the second antenna resource are the same antenna resources, and the first time domain resource in the first communication resource is different from the second time domain resource in the second communication resource.

Exemplarily, in FIG. 11, a beam shown in dashed lines is the first beam, and a beam shown in solid lines is the second beam. The first beam is used for the base station and the terminal in the air to implement the signal transmission of the sensing service, and the second beam is used for the base station and the terminal on the ground to implement the signal transmission of the communication service. Since the first beam and the second beam are formed based on the same antenna resource, this antenna resource needs to be adjusted at different time points for the first beam and the second beam, to form beams in different directions. In some embodiments, the adjustment of the beam direction may be implemented by adjusting the angle of the antenna by a phase shifter.

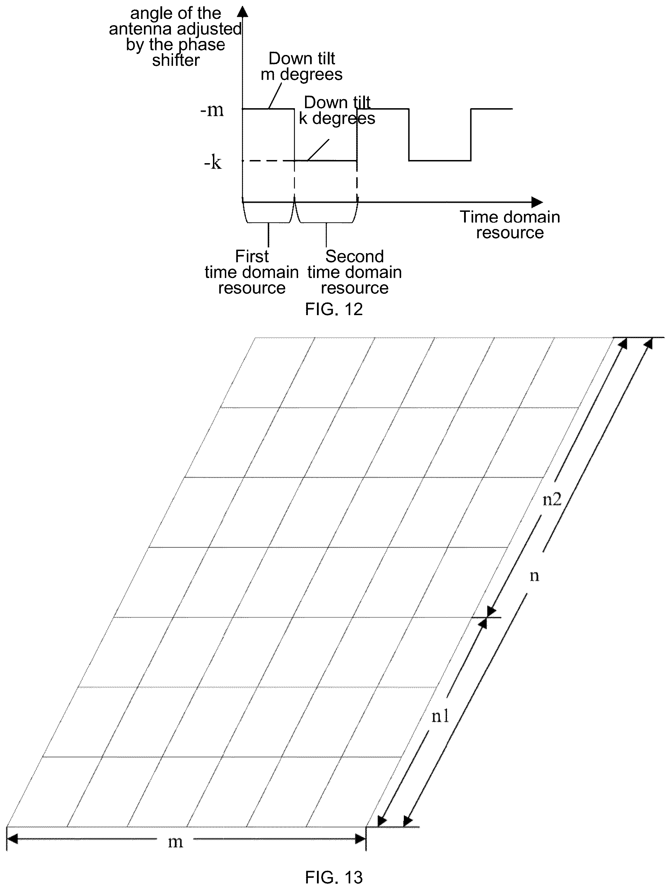

FIG. 12 is a schematic diagram of a relationship between an angle of an antenna adjusted by a phase shifter and a time domain resource.

In the first time domain resource, the phase shifter adjusts the angle of the antenna to be down tilted by m degrees, so that the antenna resource is directed toward the air, to send the sensing signal. In the second time domain resource, the phase shifter adjusts the angle of the antenna to be down tilted by k degrees, so that the antenna resource is directed toward the ground, to send the service signal, where m is different from k.

Optionally, the above process may be performed periodically, to enable this antenna resource part to implement different communication services by being directed toward different angles at different time domain resources.

It can be understood that in the above way, in practical applications, in future integrated sensing and communication scenarios, by dividing the time domain resources, based on the same antenna resource, it helps to enable the implementation of the corresponding communication services within different signal coverage ranges by adjusting the angle of the antenna resource at different time points.

It should be noted that in the above implementation, the same antenna resource is directed toward different angles in different time domain resources, to complete the corresponding signal transmission, and the occupied frequency domain resources thereof may be partial or whole, which is not limited thereto.

Exemplarily, as shown in FIG. 8, some or all of the subcarriers may be occupied in the corresponding symbol to carry the corresponding signal.

It should be noted that in the above implementation, an example in which the terminal in the air performs the sensing service and the terminal on the ground performs the communication service, is taken for the illustration, and in practical applications, there is no limitation to the communication services performed by the above-described terminals. For example, the terminal in the air may also perform the sensing service and the communication service, where the resources occupied by the sensing service and the communication service may be distinguished by frequency domain resources or time domain resources, which is not limited thereto.

In the above mode, it is provided to adjust the angle of the same antenna resource in different time domain resources, to change the signal coverage range and realize the flexible change of the communication services.

Mode 2: the first antenna resource is different from the second antenna resource, and the first time-frequency resource is the same as or different from the second time-frequency resource.

The first antenna resource being different from the second antenna resource, indicates that different antennas or ports are used to carry the sensing signal and the service signal.

As shown in FIG. 13, it is a schematic diagram of an antenna array, and if the first antenna resource and the second antenna resource used in the above Mode 1 are both an m×n antenna array shown in the figure, the first antenna resource used in Mode 2 may be an m×n1 antenna array, and the second antenna resource may be an m×n2 antenna array.

In an embodiment, when the first antenna resource is different from the second antenna resource, an adjustment is performed so that the angle of the first antenna resource is different from the angle of the second antenna resource and the first time-frequency resource is the same as the second time-frequency resource. The first time-frequency resource being the same as the second time-frequency resource includes: the first time domain resource being the same as the second time domain resource, and the first frequency domain resource being the same as the second frequency domain resource.

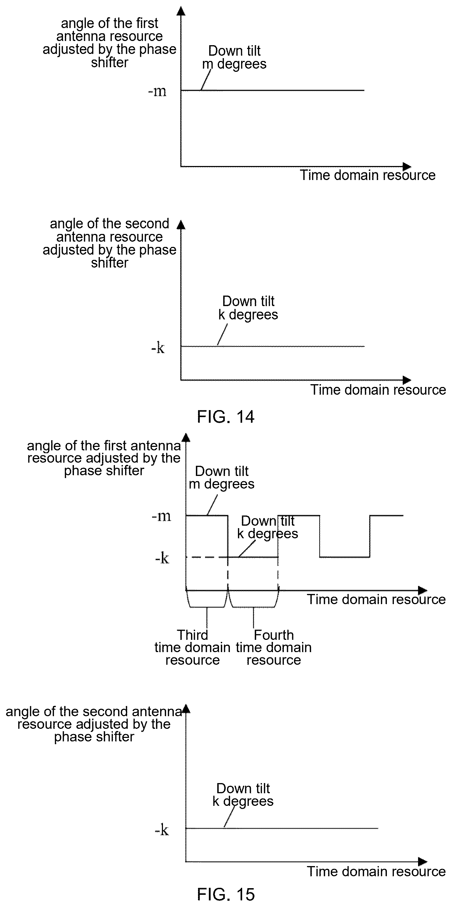

As shown in FIG. 14, it is a schematic diagram of a relationship between an angle of an antenna adjusted by a phase shifter and a time domain resource. The phase shifter adjusts the first antenna resource to tilt down by m degrees, and the phase shifter adjusts the second antenna resource to tilt down by k degrees, so as to form different beam directions, for example, to form the beams as shown in FIG. 11 at the same time, which helps to improve the signal coverage range.

It can be understood that in this case, the transmission of different service signals is implemented by directing different antenna resources toward different angles. The transmission of signals on the same time-frequency resource helps to improve the overall signal transmission capacity.

In an embodiment, in a case where the first antenna resource is different from the second antenna resource, the angle of the first antenna resource is the same or different from the angle of the second antenna resource, and the first time-frequency resource is different from the second time-frequency resource. It includes the following three cases.

Case 1: the first time domain resource is different from the second time domain resource, and the first frequency domain resource is the same as the second frequency domain resource.

It can be understood that in this case, in a case where the first time domain resource is different from the second time domain resource, the first antenna resource and the second antenna resource transmit the signals based on different time domain resources, which helps to implement the transmission of different communication service signals through the distinguishing of the time domain resources in a case where the first antenna resource and the second antenna resource are directed toward the same angle.

Case 2: the first time domain resource is the same as the second time domain resource, and the first frequency domain resource is different from the second frequency domain resource.

In a case where the first antenna resource and the second antenna resource transmit the signals on the same time domain resource, the division of communication resources is implemented through the distinguishing of frequency domain resources. Specifically, reference may be made to the schematic diagram of the frequency domain resources and the time domain resources as shown in FIG. 9.

It can be understood that in this way, it helps to reduce signal interference in a case where the same time-frequency resource is used for the transmission based on different antenna resources, thereby improving the signal transmission efficiency.

Case 3: the first time domain resource is different from the second time domain resource, and the first frequency domain resource is different from the second frequency domain resource.

The above three cases help to distinguish based on the time domain resources and/or the frequency domain resources in a case where different antenna resources are used, thereby helping to avoid signal interference and improve the signal transmission efficiency in a case where the angles of the different antenna resources are the same.

In the above Mode 2, it helps to use different antenna combinations to implement the division of the communication resources. In a case where the different antenna combinations are directed toward different angles, the signal transmission through the same time-frequency resource helps to improve the overall signal transmission capacity. In a case where different antenna combinations perform the signal transmission using different time-frequency resources, it helps reduce signal interference and improve the signal transmission efficiency.

Optionally, in practical applications, the above-described Mode 1 and Mode 2 may also be applied in combination. In a case of using Mode 2, time-frequency resources corresponding to the first antenna resource are further divided into a third time-frequency resource and a fourth time-frequency resource, where the third time-frequency resource is used for transmitting the sensing signal and the fourth time-frequency resource is used for transmitting the service signal. The third time-frequency resource is different from the fourth time-frequency resource.

The third time-frequency resource includes a third time domain resource and a third frequency domain resource, and the fourth time-frequency resource includes a fourth time domain resource and a fourth frequency domain resource.

In some embodiments, the above-described third time-frequency resource being different from the fourth time-frequency resource, means that the third time domain resource is different from the fourth time domain resource. The distinguishing of the time domain resources helps to divide some of the time domain resources in the first antenna resource, to transmit the service signal, thereby helping to satisfy the current scenario in which the demand for the communication services is high, and avoiding the sensing service from occupying too many communication resources, which affects the operation of the communication service.

It can be understood that in practical application scenarios, the above embodiment may adjust the angle of the first antenna resource in accordance with the third time domain resource and the fourth time domain resource. Assuming that the service signal is transmitted in accordance with the angle of the second antenna resource, a relationship between the adjusted angles of the first antenna resource and the second antenna resource and the time domain resource is shown in FIG. 15. In a case where the first antenna resource is used for transmitting the sensing signal, the angle of the first antenna resource is adjusted to be down tilted by m degrees, by the phase shifter, and in a case where the first antenna resource is used for transmitting the service signal, the angle of the first antenna resource is adjusted to be down tilted by k degrees, by the phase shifter. During the adjustment of the first antenna resource described above, the angle of the second antenna resource is always maintained as being down tilted by k degrees, for transmitting the service signal.

In the above way, it helps to reduce the influence on the transmission of the service signal, which is caused by the sensing signal occupying too many communication resources, and improves the overall signal transmission efficiency.

It should be noted that the adjustment shown in FIG. 15 is only used as an example, and in actual applications, the second antenna resource may also be similarly adjusted. Also, the above-described adjustment of the angle is also used as an example only, and for example, the first antenna resource may also be adjusted to an angle and more angles different from that of the second antenna resource, which is not limited thereto.

In some embodiments, the third time-frequency resource being different from the fourth time-frequency resource described above, means that the third frequency domain resource is different from the fourth frequency domain resource. This helps to transmit the service signal while transmitting the sensing signal, thereby improving the communication efficiency.

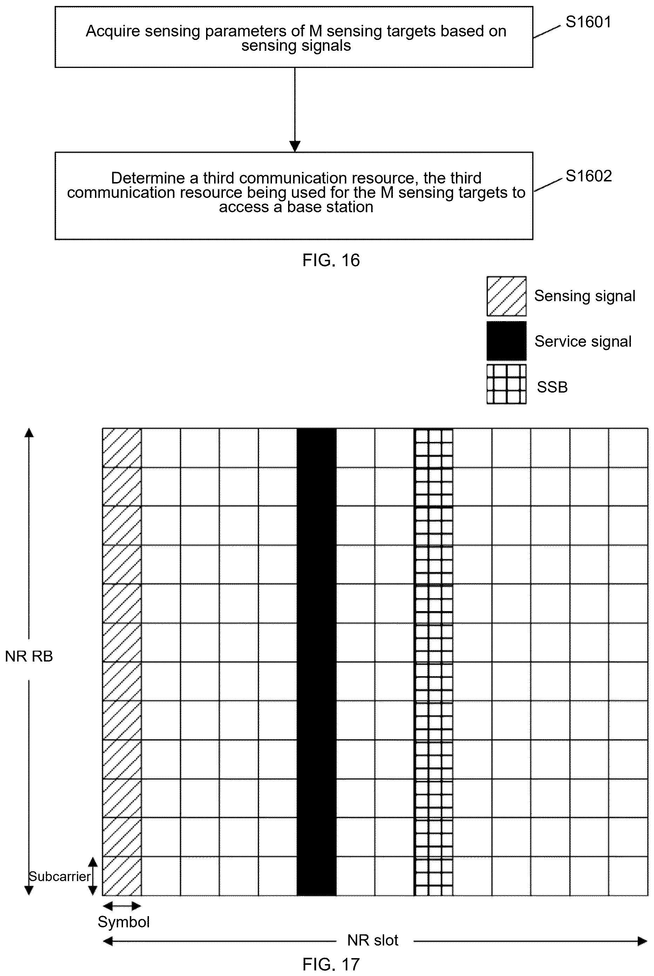

Optionally, after the above step S602, as shown in FIG. 16, the method further includes the following steps S1601 to S1602.

S1601, acquire sensing parameters of M sensing targets based on the sensing signal.

M is an integer greater than zero.

As can be seen in conjunction with the above description of the sensing service, the base station knows the sensing target and its corresponding sensing parameter by receiving the echo signal of the sensing signal.

In some embodiments, the above step S1601 includes: the base station receiving an echo signal of the sensing signal, and acquiring M sensing targets and their corresponding sensing parameters according to information carried in the echo signal.

It should be noted that, in conjunction with the above-described sensing mode, the echo signal may be an echo signal generated by the scattering of the sensing target, or the echo signal may be an echo signal that is fed back to the current base station by another base station after receiving, which is not limited thereto.

The M sensing targets refer to targets sensed through the sensing signal sent via the step S601, and the sensing parameter refers to related information corresponding to the sensing target, such as position information of the sensing target, and the like.

Exemplarily, in a future air transportation scenario, the base station sends a sensing signal into the air, and if a terminal, such as a drone, exists in an area that the signal can be propagated, the signal is reflected or scattered, and the base station acquires the sensing parameters of one or more terminals by receiving the reflected or scattered echo signal.

S1602, determine a third communication resource, the third communication resource being used for the M sensing targets to access the base station.

The third communication resource includes a third antenna resource and a third time-frequency resource.

It can be understood that when the M sensing targets access the base station via the third communication resource, it is indicated that the base station may acquire information such as identifiers of the M sensing targets, to verify the identity of the respective sensing targets. Furthermore, separate communication channels may also be established with the sensing targets, for the subsequent transmission of related information.

The above-described third communication resource is used for the sensing targets to access the base station, that is, the third communication resource is used to run a non-sensing service, i.e., to carry the above-described service signal. The division of the third communication resource may be referred to the above related description of the second communication resource.

Exemplarily, since the first communication resource is a communication resource of the sensing domain, accordingly, the sensing parameters of the above-described M sensing targets are also acquired based on this communication resource part. In practical applications, some resource of the first communication resource may be used for the communication service performed for the sensing target, i.e., the third communication resource is some of the first communication resource. This case helps when the sensing domain and the communication domain are in different spaces, to further perform other communication services based on the communication resource of the sensing domain for the sensing targets acquired in the sensing domain, so as to improve the overall service performance efficiency.

It should be noted that the above-described third communication resource may be some of the above-described first communication resource or some of the above-described second communication resource, or occupy some of the first communication resource and some of the second communication resource respectively, or may be different from the above-described first communication resource and second communication resource, which is not limited thereto.

In an embodiment, when the base station acquires the sensing parameters of the M sensing targets, the angle of the third antenna resource in the third communication resource may be determined according to position information of the M sensing targets.

Exemplarily, the base station may adjust the angle of the third antenna resource according to the positions of the M sensing targets. A configuration message may be sent to each sensing target by the third antenna resource at different time points, according to the position of each sensing target, and the configuration message is used to indicate the corresponding sensing target to access the base station.

In the above example, the communication resources are separately configured to each sensing target, thereby helping to improve the accuracy of the transmission of the configuration message. It should be noted that in practical applications, the sensing targets at a close distance may be determined into an angle of the third antenna resource, according to the distance between the respective sensing targets, which is not limited thereto.

Optionally, after the above step S1602, the method further includes: the base station acquiring random access messages sent from K terminals, and determining N sensing targets among the K terminals according to the random access messages, the N sensing targets being one or more of the M sensing targets.

It can be understood that the random access messages received by the base station after determining the third communication resource for accessing of the M sensing targets, may be not only from one or more terminals among the M sensing targets, but may also include other terminals. In this case, through the above step, it helps the base station to select out the N sensing targets for random access among the M sensing targets. Furthermore, it helps the base station to determine a sensing target that does not perform random access among the M sensing targets according to the N sensing targets, to avoid the risk of the existence of that part of the sensing target.

In an embodiment, after the above step S1602, the base station may feed back the determined third communication resource to the terminal. The base station feeds back to the terminal via a synchronization signal and physical broadcast channel (PBCH) block (synchronization signal and PBCH block, SSB) information. The SSB information includes a synchronization signal and a PBCH block, where the synchronization signal is used to provide a signal with the same time reference as the base station to the terminal, and the PBCH block transmits a parameter for initial access.

Exemplarily, in a case where the SSB is configured according to 8 beams, the beam indexes are 0 to 7. The beam indexes 4, 5, 6, and 7 are configured for random access of the M sensing targets. The base station receives random access messages from the K terminals, where the random access messages are carried on physical random access channels (PRACHs) acquired by the terminals, and the base station acquires PRACH identifiers according to the random access messages. In the 5G protocol, the PRACH has a one-to-one correspondence with the beam index, and for example, the beam index 4 corresponds to the PRACH 4. According to the correspondence, the base station may determine N terminals among the accessed K terminals based on the beam indexes 4, 5, 6, and 7, where the N terminals are one or more of the above-described M sensing targets, and the N terminals may also be referred to as N sensing targets.

In an embodiment, the SSB may occupy some or all of the RBs in the first communication resource in accordance with the resource division of the Mode 1 in the above step S602.

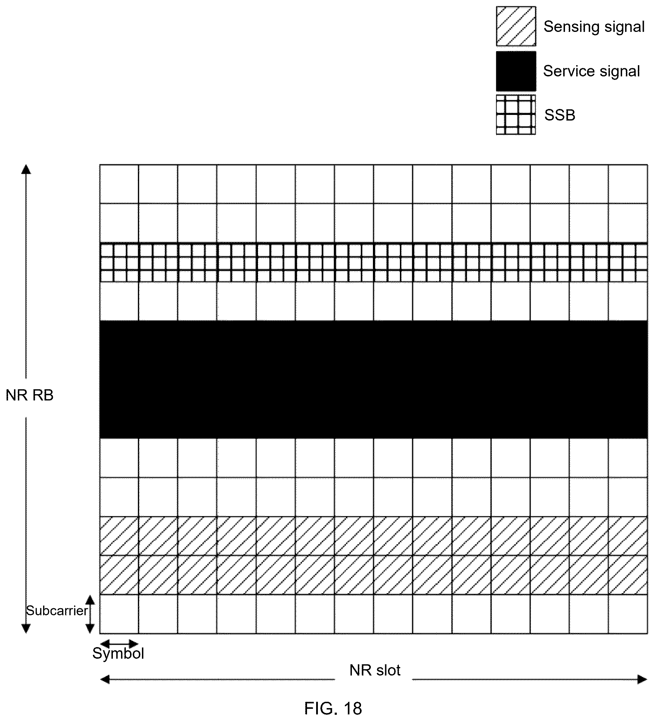

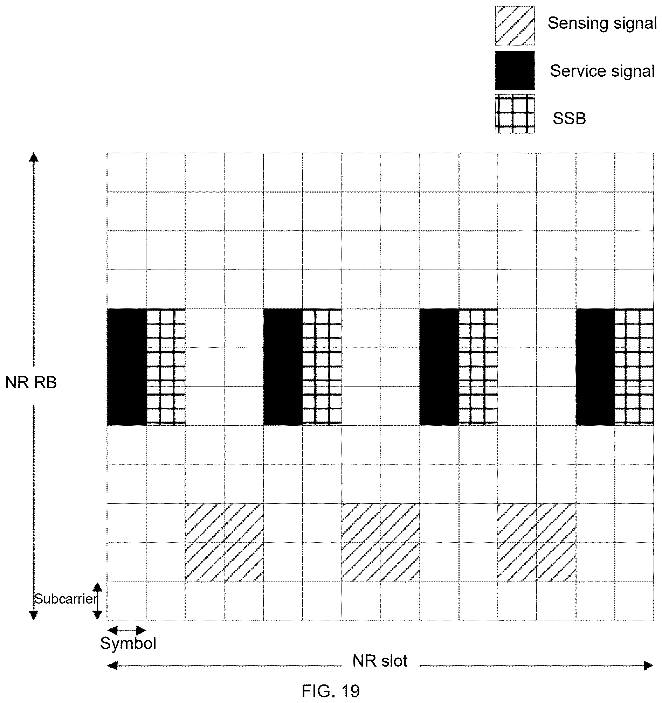

Exemplarily, as shown in FIG. 17, it is a schematic diagram of resources of an SSB with a sensing signal and a service signal. The SSB occupies all of the RBs in a symbol, distinguished from the sensing signal and the service signal by different symbols. As shown in FIG. 18, it is a schematic diagram of resources of an SSB with a sensing signal and a service signal. The SSB occupies different RBs in the same symbols as the sensing signal and service signal. As shown in FIG. 19, it is a schematic diagram of resources of an SSB with a sensing signal and a service signal. The SSB occupies different RBs in different symbols than the sensing signal and service signal.

In an example, it is assumed that the first antenna resource of the sensing domain includes antenna channels 0 to 7 with a total of 8 antennas, and the second antenna resource of the communication domain includes antenna channels 8 to 63 with a total of 56 antennas. The SSB is transmitted through the 8 antennas of the first antenna resource, and the service signal is transmitted through the 56 antennas of the second antenna resource. Furthermore, in order to avoid signal interference generated within the same time-frequency resource, the first frequency domain resource in the sensing domain is further divided into RBs, with some RBs for carrying the SSB and the remaining RBs for carrying the service signal. In this way, it helps to use the communication resource in the sensing domain for performing other communication services for the sensing target.

In some embodiments, the base station releases the third communication resources after determining the accessed N sensing targets.

It can be understood that after the terminal completes the random access, in order to improve the overall resource utilization ratio, the base station may release the third communication resources used for the sensing target to access to the base station, thereby helping to continuously use this resource part to carry the sensing signal or the service signal.

In an embodiment, the base station may release the third communication resources after no newly added sensing target is found within a preset time period.

Furthermore, the base station may adjust the third communication resource according to the amount of change of the newly added sensing targets within a preset time period.

Exemplarily, in a case where the amount of change of the newly added sensing targets increases, the base station may appropriately extend the third communication resource, to satisfy more sensing targets accessing the base station. In a case where the amount of change of the newly added sensing targets decreases, the base station may appropriately reduce the third communication resource, to save resource overhead.

Optionally, after the above step S1602, the method further includes: acquiring access information of N sensing targets accessed based on the third communication resource; and in response to N<M, generating alert information, the alert information being used to indicate presence of an unaccessed sensing target among the M sensing targets.

The N sensing targets may be the sensing targets determined based on the K terminals described above.

It can be appreciated that in response to N<M, it indicates that there are some sensing targets that are not accessed to the base station, among the M sensing targets determined in the above step S1601. Such a case may indicate that the part of the sensing targets that are not accessed to the base station have a communication failure, such as not receiving the third communication resource determined by the base station, or that the part of the sensing targets that are not accessed to the base station refuse to access to the base station. In the above cases, the part of the sensing targets that are not accessed to the base station all have a security risk, and then, the base station may generate alert information to prompt the part of the sensing targets to access to the base station for communication, or report the alert information to the cloud service platform to perform a corresponding policy.

Optionally, after the above step S1601, the method further includes: reporting, by the base station, the sensing parameters of the M sensing targets to the cloud service platform.

Exemplarily, in conjunction with the above description of the scenario about FIG. 5, the cloud service platform receives the sensing parameters of the M sensing targets sent from the base station, which helps the data processing for the sensing parameters, to obtain the processed results. For example, the sensing parameter includes position information of the sensing target, and the data processing includes labeling the position information of the M sensing targets in a map. For another example, when the sensing target is a movable terminal, the cloud service platform may also draw a moving trajectory of the movable terminal therein, according to the position information of the M sensing targets.

It can be understood that the above-described sensing signal is transmitted in accordance with the first communication resource, and the base station acquires the corresponding echo signal to obtain the sensing parameter therein. In a case where the sensing targets are updated, it may be further fed back to the cloud service platform, for data updating and processing, thereby helping the cloud service platform to acquire real-time information of the sensing targets in the sensing domain.

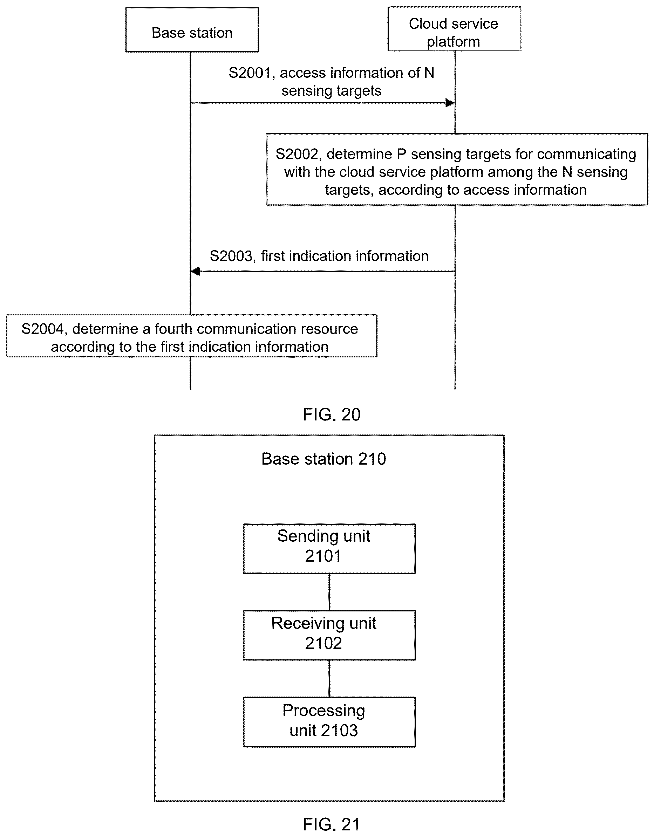

Optionally, after the above step S1602, as shown in FIG. 20, the method further includes the following steps S2001 to S2004.

S2001, the base station sends the access information of the N sensing targets to the cloud service platform.

Accordingly, the cloud service platform acquires the access information of the N sensing targets.

Optionally, the access information of the N sensing targets includes identifiers, position information of the N sensing targets, and the like.

In some embodiments, the cloud service platform, before the above step S2001, also acquires the sensing parameters of the M sensing targets, and the M sensing targets are sensing targets in the sensing domain acquired by the base station through the sensing signal. Furthermore, in a case where the cloud service platform determines that N<M, the cloud service platform generates alarm information.

It can be understood that, in the above embodiment, the cloud service platform acquires the sensing targets, and the sensing targets actually accessing to the base station, and compares the numbers, and if there is an unaccessed sensing targets, generates alarm information, to indicate or prompt the identity verification for the part of the sensing targets. The related description may refer to the alarm information generated by the base station described above, and will not be repeated.

S2002, the cloud service platform determines, according to the access information, P sensing targets for communicating with the cloud service platform, among the N sensing targets.

The P sensing targets are at least one sensing target among the N sensing targets.

In some embodiments, the sensing target may carry data information monitored by a sensor and the like, and the cloud service platform, after acquiring the access information of the N sensing targets, further communicates with the sensing targets, which helps to acquire the data information carried or monitored by them.

In some embodiments, the cloud service platform communicates with the sensing targets, which helps the cloud service platform to manage the sensing targets in the sensing domain. Exemplarily, the cloud service platform acquires information of the N sensing targets, and determines moving trajectories of the N sensing targets. In a case where it is determined that the moving trajectories may be overlapped between the sensing targets and a collision occurs, the cloud service platform may communicate with the part of the sensing targets to avoid the situation such as the collision, thereby avoiding the risk.

Exemplarily, the sensing targets are drones flying in the air, and the cloud service platform monitors the real-time positions of the drones' flights, and in some cases, indicates the drone to adjust the flight altitude or the flight speed, or indicates the drone to fly away from the current sensing domain, and the like.

It should be noted that the above description is only used as an example, and in practical applications, scenarios in which more or less cloud service platforms communicate with the sensing targets may be included, which is not limited thereto.

S2003, the cloud service platform sends first indication information to the base station.

The first indication information is used to indicate the base station to configure a fourth communication resource for P sensing targets, the fourth communication resource being used for a data transmission between the P sensing targets and the cloud service platform.

S2004, the base station determines the fourth communication resource according to the first indication information.

It can be understood that the fourth communication resource is used to establish data transmission channels between the P sensing objects and the cloud service platform. For example, they are physical uplink shared channels (PUSCHs).

It should be noted that the above-described fourth communication resource may be some of the above-described first communication resource or some of the above-described second communication resource, or occupy some of the first communication resource and some of the second communication resource respectively, or may be different from the above-described first communication resource and second communication resource, which is not limited thereto.

Exemplarily, since the first communication resource is a communication resource of the sensing domain, and accordingly, the above-described P sensing targets are also determined based on the communication resource part, and in practical applications, some of the first communication resource may be used for the communication service performed for the sensing targets, i.e., the fourth communication resource is some of the first communication resource. This case helps to adjust the first antenna resource with respect to the sensing target, in a case where the sensing domain and the communication domain are in different spaces and the angles of the first antenna resource and the second antenna resource are different, so as to improve the overall service performance efficiency.

In some embodiments, the base station may adjust the angle of the fourth antenna resource according to the positions of the P sensing targets. A PUSCH may be configured for each sensing target at different time points according to the position of each sensing target, to implement the data transmission of each sensing target.

In the above way, it helps the base station to configure the communication resources according to the P sensing targets determined by the cloud service platform, to implement the data transmission between the sensing targets and the cloud service platform, so as to implement the communication in a targeted manner, reduce the waste of resources, and improve the resource utilization ratio.

It should be noted that, in practical applications, the base station may also directly configure the fourth communication resource for the N sensing targets, after determining the N sensing targets accessing to the base station, so as to reduce the processing and computation of the cloud service platform, and improve the communication efficiency, which is not limited thereto.

Optionally, after the above step S2004, the method further includes: sending, by the cloud service platform, a second indication information to the base station, the second indication information being used to indicate releasing the fourth communication resource. The base station receives the second indication information and releases the fourth communication resource.

It can be understood that in a case where the cloud service platform determines that it is no longer data transmission with one or more sensing targets among the P sensing targets, it may indicate the base station to release the fourth communication resource, to reduce waste of resources and improve the overall resource utilization ratio.

It can be understood that the above-described base station, in order to implement the above-described functions, includes corresponding hardware structures and/or software modules for performing the respective functions. Those skilled in the art should easily recognize that the present disclosure can be implemented in the form of hardware or a combination of hardware and computer software, in conjunction with algorithm steps of the examples described in the embodiments of the present disclosure. Whether a certain function is performed by the hardware or the computer software-driven hardware depends on the specific application and restrictive conditions on the design of the technical solutions. Professional technicians may use different methods to implement the described functions for each specific application, but such implementation should not be considered beyond the scope of the present disclosure.

The embodiments of the present disclosure may divide the base station into functional modules according to the method embodiments described above, for example, each functional module may be divided corresponding to each function, or two or more functions may be integrated in a functional module. The above-described integrated module may be implemented in the form of hardware or implemented in the form of software. It should be noted that the division of the modules in the embodiments of the present disclosure is schematic and is only a logical functional division, and there may be another division when actually implemented. An example of each functional module divided corresponding to each function is taken for the illustration below.

In a case where each functional module is divided corresponding to each function, FIG. 21 illustrates a structural schematic diagram of the base station involved in the above embodiments. As shown in FIG. 21, the base station 210 includes a sending unit 2101, a receiving unit 2102, and a processing unit 2103.

The sending unit 2101 is configured to send a sensing signal based on a first communication resource, the sensing signal being used to acquire information of a sensing target. For example, the sending unit 2101 is configured to perform the above step S601 in FIG. 6.

The sending unit 2101 is further configured to send a service signal based on a second communication resource, the service signal being used to carry information of a communication service; where the first communication resource is different from the second communication resource. For example, the sending unit 2101 is further configured to perform the above step S602 in FIG. 6.

In some examples, the first communication resource includes at least a first antenna resource and a first time domain resource, and the second communication resource includes at least a second antenna resource and a second time domain resource; the first antenna resource is the same as the second antenna resource, and the first time domain resource is different from the second time domain resource; or the first antenna resource is different from the second antenna resource, and the first time domain resource is the same as or different from the second time domain resource.

In some examples, the first communication resource further includes a first frequency domain resource, and the second communication resource further includes a second frequency domain resource; and in response to the first antenna resource being different from the second antenna resource, the first frequency domain resource is different from the second frequency domain resource.

In some examples, the first antenna resource being different from the second antenna resource, includes: a direction of a first beam formed by the first antenna resource is different from a direction of a second beam formed by the second antenna resource.

In some examples, the receiving unit 2102 is configured to acquire sensing parameters of M sensing targets based on the sensing signal. For example, the receiving unit 2102 is configured to perform the above step S1601 in FIG. 16. The processing unit 2103 is configured to determine a third communication resource, the third communication resource being used for the M sensing targets to access the base station. For example, the processing unit 2103 is configured to perform the above step S1602 in FIG. 16.

In some examples, the receiving unit 2102 is further configured to acquire random access messages sent from K terminals; and the processing unit 2103 is further configured to determine N sensing targets among the K terminals according to the random access messages, the N sensing targets being one or more of the M sensing targets.

In some examples, the receiving unit 2102 is further configured to acquire access information of N sensing targets accessed based on the third communication resource; and the processing unit 2103 is further configured to generate alert information in response to N<M, the alert information being used to indicate presence of an unaccessed sensing target among the M sensing targets.

In some examples, the processing unit 2103 is further configured to release the third antenna resource.

In some examples, the sending unit 2101 is further configured to send the access information of the N sensing targets to a cloud service platform; the receiving unit 2102 is further configured to receive first indication information sent from the cloud service platform, the first indication information being used to indicate the base station to configure a fourth communication resource for P sensing targets; the P sensing targets being at least one sensing target of the N sensing targets; the fourth communication resource being used for a data transmission between the P sensing targets and the cloud service platform; and the processing unit 2103 is further configured to determine the fourth communication resource according to the first indication information.

In some examples, the acquiring unit 2102 is further configured to receive second indication information sent from the cloud service platform, the second indication information being used to indicate to release the fourth communication resource; and the processing unit 2103 is further configured to release the fourth communication resource according to the second indication information.

In an example, the base station 210 further includes a storage unit. The storage unit is configured to store computer-executed instructions, and other units in the base station may perform the corresponding action according to the computer-executed instructions stored in the storage unit.

The description about the above optional methods may refer to the above method embodiments, and will not be repeated herein. In addition, any one of the explanations for the base station 210 provided above and the descriptions of the beneficial effects may refer to the above corresponding method embodiments, and will not be repeated herein.

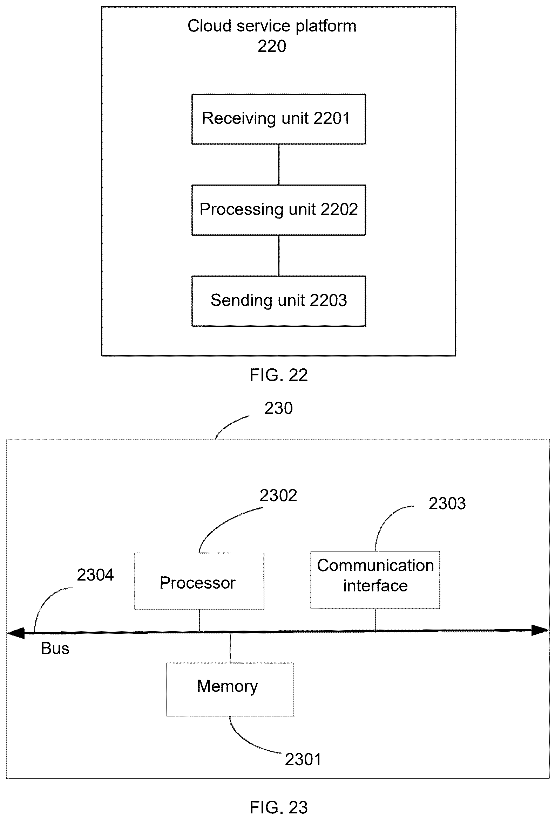

In a case of each functional module divided corresponding to each function, FIG. 22 illustrates a structural schematic diagram of the cloud service platform involved in the above embodiments. As shown in FIG. 22, the cloud service platform 220 includes a receiving unit 2201, a processing unit 2202, and a sending unit 2203.

The receiving unit 2201 is configured to acquire access information for N sensing targets accessing a base station. For example, the receiving unit 2201 is configured to perform the step S2001 in FIG. 20.

The processing unit 2202 is configured to determine P sensing targets among the N sensing targets according to the access information, the P sensing targets being used for a data transmission with the cloud service platform. For example, the processing unit 2202 is configured to perform the step S2002 in FIG. 20.

The sending unit 2203 is configured to send first indication information to the base station, the first indication information being used to indicate the base station to configure a fourth communication resource for the P sensing targets. For example, the sending unit 2203 is configured to perform the step S2003 in FIG. 20.

In some examples, the sending unit 2203 is further configured to send second indication information to the base station, the second indication information being used to indicate the base station to release the fourth communication resource.

In some examples, the receiving unit 2201 is further configured to acquire sensing parameters of M sensing targets; and the processing unit 2202 is further configured to generate alert information in response to N<M, the alert information being used to indicate presence of an unaccessed sensing target among the M sensing targets.

In an example, the cloud service platform 220 further includes a storage unit. The storage unit is configured to store computer-executed instructions, and other units in the cloud service platform may perform the corresponding action according to the computer-executed instructions stored in the storage unit.

The description about the above optional methods may refer to the above method embodiments, and will not be repeated herein. In addition, any one of the explanations for the cloud service platform 220 provided above and the descriptions of the beneficial effects may refer to the above corresponding method embodiments, and will not be repeated herein.

In a case of implementing the functions of the integrated modules described above by using the form of hardware, the embodiments of the present disclosure provide another structure of a communication apparatus for any one of the base stations or the cloud service platform involved in the above embodiments. As shown in FIG. 23, the communication apparatus 230 includes: a memory 2301, a processor 2302, a communication interface 2303, and a bus 2304.

The memory 2301 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure. For example, the memory 2301 is configured to store computer instructions to cause the above-described processor 2302 to run the computer instructions to perform the above steps.

The processor 2302 may be a logic block, module, and circuitry that implements or performs various examples described in conjunction with the embodiments of the present disclosure. The processor 2302 may be a central processor, a general-purpose processor, a digital signal processor, an application-specific integrated circuit, a field programmable gate array or other programmable logic device, a transistor logic device, a hardware component, or any combination thereof. It may implement or perform various exemplary logic blocks, modules and circuits described in conjunction with the embodiments of the present disclosure. The processor 2302 may also be a combination that implements a computing function, such as including a combination of one or more microprocessors, a combination of a DSP (Digital Signal Processor) and a microprocessor, and the like. For example, the processor 2302 is configured to perform the above various steps in FIG. 16.

The communication interface 2303 is configured to connect with other devices via a communication network. The communication network may be an Ethernet network, a radio access network, and wireless local area networks (WLAN), etc. For example, the communication interface 2303 is configured to perform the various steps in FIG. 6.

In an embodiment, the memory 2301 may exist independently of the processor 2302, and the memory 2301 may be connected to the processor 2302 via a bus 2304, for storing instructions or program codes. The processor 2302 can implement the communication method provided in the embodiments of the present disclosure, when calling and executing the instructions or program codes stored in the memory 2301.

In an embodiment, the memory 2301 may also be integrated with the processor 2302.

The bus 2304 may be an extended industry standard architecture (EISA) bus or the like. Buses 2304 may be divided into address buses, data buses, control buses, and the like. For the convenience of representation, only one thick line is used in FIG. 23 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the communication method as described in any of the above-described embodiments.

Exemplarily, the above-described computer-readable storage medium may include, but be not limited to, a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the communication method as described in any embodiment of the above-described embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A communication method, **characterized in that** the method is applied to a base station, and the method comprises:
sending a sensing signal based on a first communication resource, the sensing signal being used to acquire information of a sensing target; and
sending a service signal based on a second communication resource, the service signal being used to carry information of a communication service; wherein the first communication resource is different from the second communication resource.

2. The method according to claim 1, wherein the first communication resource comprises at least a first antenna resource and a first time domain resource, and the second communication resource comprises at least a second antenna resource and a second time domain resource; the first antenna resource is the same as the second antenna resource, and the first time domain resource is different from the second time domain resource; or the first antenna resource is different from the second antenna resource, and the first time domain resource is the same as or different from the second time domain resource.

3. The method according to claim 2, wherein the first communication resource further comprises a first frequency domain resource and the second communication resource further comprises a second frequency domain resource; and in response to the first antenna resource being different from the second antenna resource, the first frequency domain resource is different from the second frequency domain resource.

4. The method according to claim 2 or 3, wherein the first antenna resource being different from the second antenna resource, comprises: a direction of a first beam formed by the first antenna resource is different from a direction of a second beam formed by the second antenna resource.

5. The method according to any one of claims 1 to 4, further comprising:
acquiring sensing parameters of M sensing targets based on the sensing signal; and
determining a third communication resource, the third communication resource being used for the M sensing targets to access the base station.

6. The method according to claim 5, further comprising:
acquiring random access messages sent from K terminals; and
determining N sensing targets among the K terminals according to the random access messages, the N sensing targets being one or more of the M sensing targets.

7. The method according to claim 5 or 6, further comprising:
acquiring access information of N sensing targets accessed based on the third communication resource; and
in response to N<M, generating alert information, the alert information being used to indicate presence of an unaccessed sensing target among the M sensing targets.

8. The method according to claim 7, wherein after acquiring the access information of the N sensing targets, the method further comprises:
releasing the third antenna resource.

9. The method according to claim 7 or 8, further comprising:
sending the access information of the N sensing targets to a cloud service platform;
receiving first indication information sent from the cloud service platform, the first indication information being used to indicate the base station to configure a fourth communication resource for P sensing targets; the P sensing targets being at least one sensing target of the N sensing targets; the fourth communication resource being used for a data transmission between the P sensing targets and the cloud service platform; and
determining the fourth communication resource according to the first indication information.

10. The method according to claim 9, further comprising:
receiving second indication information sent from the cloud service platform, the second indication information being used to indicate to release the fourth communication resource; and
releasing the fourth communication resource according to the second indication information.

11. A communication method, **characterized in that** the method is applied to a cloud service platform, and comprises:
acquiring access information for N sensing targets accessing a base station;
determining P sensing targets among the N sensing targets according to the access information, the P sensing targets being used for a data transmission with the cloud service platform; and
sending first indication information to the base station, the first indication information being used to indicate the base station to configure a fourth communication resource for the P sensing targets.

12. The method according to claim 11, further comprising:
sending second indication information to the base station, the second indication information being used to indicate the base station to release the fourth communication resource.

13. The method according to claim 11 or 12, wherein before acquiring the access information for the N sensing targets accessing the base station, the method further comprises:
acquiring sensing parameters of M sensing targets; and
after acquiring the access information for the N sensing targets accessing the base station, the method further comprises:
generating alert information in response to N<M, the alert information being used to indicate presence of an unaccessed sensing target among the M sensing targets.

14. A communication apparatus, **characterized by** comprising: a processor and a memory; wherein
the memory has stored instructions executable by the processor; and
the processor is configured to, when executing the instructions, cause the communication apparatus to implement the communication method according to any one of claims 1 to 10 or the communication method according to any one of claims 11 to 13.

15. A computer-readable storage medium, **characterized in that** the computer-readable storage medium has stored computer instructions, and the computer instructions, when executed on a communication apparatus, cause the communication apparatus to perform the communication method according to any one of claims 1 to 10 or the communication method according to any one of claims 11 to 13.
